# EUROPEAN PATENT SPECIFICATION

(11) **EP 1 097 591 B1**
(45) Date of publication and mention of the grant of the patent: **30.10.2002**
(21) Application number: 99926753.7
(22) Date of filing: 18.06.1999
(51) Int. Cl.: H04N 7/173

(54) **OPTIMIZED SYSTEM FOR DISTRIBUTING TELEVISION AND TELECOMMUNICATION SERVICES FROM A PERIPHERAL NODE TO USER TERMINALS**
OPTIMIERTES SYSTEM ZUR VERTEILUNG VON FERNSEH- UND TELEKOMMUNIKATIONDIENSTEN VON PERIPHEREN KNOTENPUNKT ZU BENUTZERENDGERÄTEN
SYSTEME OPTIMISE DE REPARTITION DES SERVICES DE TELECOMMUNICATION ET DE TELEVISION A PARTIR D'UN NOEUD PERIPHERIQUE VERS DES TERMINAUX D'UTILISATEUR

(30) Priority: 13.07.1998 IT RM980469
(43) Date of publication of application: 09.05.2001
(73) Proprietor: Uni.Com S.P.A., 81031 Aversa (CE) (IT)
(72) Inventor: ARDEMAGNI, Fiorenzo, I-00012 Guidonia (IT)
(74) Representative: Iannone, Carlo Luigi
(86) International application number: IT9900178
(87) International publication number: WO00003542

(56) References cited:
- EP-A- 0 756 393
- EP-A- 0 779 740
- WO-A-96/24989
- WO-A-97/01236

## Description

This invention relates to an optimized system for distributing television and telecommunication services from a peripheral node to user terminals.

More particularly, this invention relates to a system of the above mentioned kind that enables the already existing facilities designed for centralized distribution of land based television channels, also known as Master Antenna TV (MATV) to also be adapted, in economically convenient and reliable way, to simultaneously distribute other television and telecommunication services, also including the interactive services.

It is known that, in Italy as well as in many other countries, hybrid telecommunication networks based upon coaxial cables and fibers, also known as HFC (Hybrid Fiber-Coax) networks, are being presently developed and largely utilized, to distribute many services, particularly multi-medial services of interactive type.

Such HFC networks are based upon peripheral nodes to distribute the signals to the individual user terminals connected thereto. This is the case, for instance, of a building node connected by means of suitable cables to the network in order to distribute the signals to the users arranged throughout the building itself. In this respect, some building nodes can be connected to the network, at least in so far the television services are concerned, by means of a Microwave Video Distribution Service, namely by means of so-called MVDS radio links.

The interactive telecommunication services include data and/or voice return or upstream channels from the individual user terminals to the concerned peripheral node, such as a building node, connected to them and subsequently to the network.

Particularly, document WO-A-96/24989 discloses a system for distribution of television and other telecommunication services from a peripheral node to user terminals, including downstream and upstream data and/or voice channels. Said system includes facilities for bidirectional distribution of signals to said user terminals, said facilities being connected to a bidirectional switch exchange.

Reference will be particularly made hereinafter to building nodes considered as peripheral nodes, but it should be understood that the system according to this invention can be applied to any peripheral node.

The architectures of the facilities designed to distribute the various services from a building node to the individual user terminals connected thereto are based upon the concept that all capabilities that each services is adapted to provide be available to each one of said terminals. In particular, in the case of television services, such as the distribution of band-based television channels by means of MATV facilities, the distribution of satellite-based television channels by means of SMATV facilities (Satellite MATV) and the distribution cable or wire pay television or CATV (Community Antenna TV), this means that all television channels accessible to the users should be available on their terminals, with consequent extended band exploitation.

All presently existing MATV facilities are not sufficient to fulfil the above outlined integral availability of the concerned services on each user terminal and this entails that a coaxial facility is to be provided between the building node and the assembly of the user terminals for each additional television and/or telecommunication service.

This results into a number of drawbacks.

First of all, such facilities are generally plugged in different sockets within the apartments.

Furthermore, the differences between the equipment entail noticeable difficulties in the maintenance intervents.

Lastly, since the above mentioned facilities are generally installed in different times, there are noticeable disadvantages for the users.

Some approaches have already been developed to eliminate the above mentioned drawbacks.

The most largely adopted approach provides for realizing a single plant structure having a very extended pass band, with possible frequency translation of some signals in order to allow signals allocated to at least partially overlapping band to co-exist.

Anyway also this approach has some drawbacks.

In the first place, the MATV plant generally provided within the building is not utilized.

Besides that, the capabilities each service is adapted to furnish should be limited; in particular, the number of available channels for some television services should be reduced.

Lastly, such approaches do not allow to enlarge the number and the typologies of the television and/or telecommunication services that could be possibly made available after the system facilities have been firstly sized.

It is an object of this invention, therefore, to enable in simple, economically convenient and reliable way to utilize a single plant for distributing the concerned signals, preferably a conventional, possibly already installed MATV plant, between the peripheral node and the user terminals connected thereto, for contemporaneous distribution of land based television channels as well as other television and/or telecommunication services, also including any interactive services.

Specific subject matter of this invention is an optimized system for distribution of television and telecommunication services from a peripheral node to user terminals, said television services including land based radio frequency broadcast television channels, satellite based radio frequency broadcast television channels and HFC network or cable based broadcast television channels, each of said telecommunication services including a downstream data and/or voice channel and an upstream data and/or voice channel, said system also including a bidirectional switch exchange connected to said peripheral node, a facility for bi-directional distribution of signals connected to said exchange and at least a user apparatus connected to said bi-directional facility as well as to said user terminals, said exchange comprising a filter, a frequency filtering and translating unit, a logic control unit, a combiner and a selector, said combiner and selector being connected to said bidirectional distribution facility, the signals belonging to said land based television channels being applied to the input of said combiner, said filter receiving the signals belonging to said cable based television channels and to said downstream data and/or voice channels, said filter separating the signals belonging to said downstream data and/or voice channels from the signals belonging to said cable based television channels, said filter also reallocating the signals belonging to said downstream data and/or voice channels to pre-established frequencies and applying them to the input of said combiner, said filter also applying the signals belonging to said cable based television channels to said frequency filtering and translating unit, the signals belonging to said satellite based television channels being also applied to said frequency filtering and translating unit, said selector being connected to said bi-directional distribution facility in order to receive a local upstream data sequence therefrom and to apply it to said control logic unit and to receive the signals belonging to said upstream data and/or voice channels from said bi-directional distribution facility and to apply them to said peripheral node, said control logic unit generating the control signals to be applied to said frequency filtering and translating unit and a local downstream data sequence to be applied to the input of said combiner, said frequency filtering and translating unit selecting the signals belonging to both said cable based television channels and said satellite based television channels and frequency reallocating and/or translating them for applying them to the input of said combiner, said combiner mixing the input signals and applying them to said bi-directional distribution facility, said user apparatus including a demodulator, a logic unit, a modulator and a combiner, said logic unit processing said local downstream data sequence outcoming from said demodulator, said modulator modulating a local upstream data sequence related to said user apparatus, said combiner mixing the signals belonging to said local upstream data sequence as well as the signals belonging to upstream data and /or voice channels related to said user apparatus and applying them to said bi-directional distribution facility.

According to this invention, said exchange further comprises, upstream of said combiner, a unit for filtering the signals belonging to said land based television channels, which eliminates all replicated signals having the worst signal-to-noise ratio (SNR).

Still according to this invention, said television services further comprise television channels related to closed circuit television systems (CCTV) that are coupled to the input of said combiner or to said frequency filtering and translating unit.

Further according to this invention, said frequency filtering and translating unit comprises a converter unit for conversion of HFC radio frequencies, a converter unit for conversion of satellite based radio frequencies as well as a switch unit, said converter units having N inputs and N outputs, said switch unit having 2*N inputs and N outputs, the homologous outputs of both said converter units being alternatively selected by said switch unit and transferred to said frequency filtering and translating unit.

Still according to this invention, said HFC radio frequency converter unit comprises N converter-filters, each of which comprises a tuner having a constant amplitude pass band and tuneable central frequency, a mixer, a selectable frequency local oscillator, a band pass filter having a constant amplitude pass band and a tuneable central frequency, as well as a logic unit, said tuner filtering said input signal, said mixer, said local oscillator and said pass band filter translating the frequency of the filtered signal and said logic unit generating the control signals.

Further according to this invention, said satellite based radio frequency converter unit comprises N converter-filters, each of which comprises a tuner having a constant amplitude pass band and tuneable central frequency, a mixer, a selectable frequency local oscillator, a band pass filter having a constant amplitude pass band and a tuneable central frequency, as well as a logic unit, said tuner filtering said input signal, said mixer, said local oscillator and said pass band filter translating the frequency of the filtered signal and said logic unit generating the control signals.

Preferably, each of said N converter-filters comprised in said satellite based radio frequency converter unit further comprises a transmodulator.

Still according to this invention, said satellite based radio frequency converter unit comprises N converter-filters, each of which comprises a transmodulator and a control logic unit, said transmodulator filtering , transmodulating and frequency translating the input signal.

Further according to this invention, said signal bi-directional distribution facility is an apparatus for centralized distribution of land based television channels or a Master Antenna TV (MATV) facility.

Again according to this invention, each user apparatus is connected to one or more telephone devices and/or to one or more Personal Computers or PCs and additionally it is connected to one or more communication apparatuses or Set-Top-Box (STB), with a pay television service provider.

Still according to this invention, the local upstream or local downstream data sequences are modulated by digital modulation, preferably FSK and/or a PSK and/or QAM modulation and said user apparatus further comprises a digital demodulator arranged upstream of said logic unit, a frequency multiplexer and a TELCO demodulator for telecommunication services, arranged upstream of said user terminals, a TELCO modulator for telecommunication services, arranged downstream of said user terminals, a digital modulator which receives the television channel selection data from at least one user terminal as well as a combiner arranged downstream of said TELCO modulator and of said digital modulator and upstream of said bi-directional distribution facility.

This invention will be now described by way of illustration not by way of limitation, according to its preferred embodiment, by particularly referring to the Figures of the enclosed drawing, in which:
Figure 1 is a schematic representation of the system according to this invention;
Figure 2 shows a schematic diagram illustrating the frequency distribution of the signal appearing upstream of the system of Figure 1;
Figure 3 is a schematic representation of the preferred embodiment of the bi-directional switch exchange of the system of Figure 1;
Figure 4a shows a block diagram of a first converter filter as utilized in the exchange of Figure 3;
Figure 4b shows a schematic diagram illustrating the frequency distribution of the signal appearing at the output of the converter filter of Figure 4a;
Figure 5a shows a block diagram of a second converter filter as utilized in the exchange of Figure 3;
Figure 5b shows a block diagram of a second embodiment of the second converter filter as utilized in the exchange of Figure 3;
Figure 6 shows a schematic representation of the local downstream data channel as generated by exchange of Figure 3; and
Figure 7 shows a schematic representation of the user apparatus in the system of Figure 1.

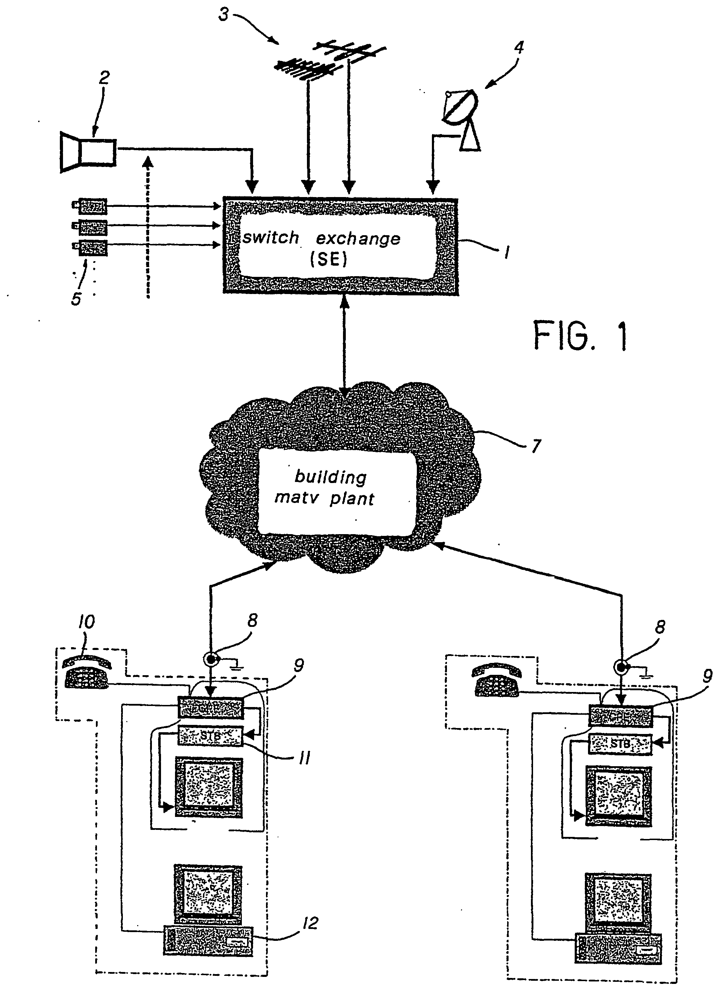

By referring now to Figure 1, the system according to this invention comprises a bi-directional switch exchange 1, positioned at a building node, which receives all signals belonging to the television and telecommunication services available in network HFC2, in system 3 which receives the land based television radio frequencies, in system 4 which receives the satellite based television radio frequencies as well as in local apparatuses 5 of the building, such as, for instance, the Closed Circuit Television systems (CCTV) and the video intercommunication systems.

Exchange 1 is connected to the MATV plant 7 of the building which conveys the signal in bi-directional way between exchange 1 and the individual user sockets 8.

Each socket 8 is connected to a user apparatus 9 which conveys the various signals, in bi-directional way, between said socket 8 and the corresponding user terminals 10, 11 and 12. in particular, such terminals comprise a telephone set 10, a communication apparatus 11, known under the name Set-Top-Box or STB, with a pay television service provider and a Personal Computer or PC 12.

As it will be detailedly described hereinafter, the system according to this invention allows to utilize a MATV plant or facility for conveying in bi-directional way the signals of all television and telecommunication services to the input of said exchange, thereby supplying them to all active user terminals (10, 11, 12), by means of a selection operation, advanced up to the level of said exchange 1, among the specific non land based television channels as requested by active STB terminals 11. In particular, when a user selects a specific satellite or cable based television channel on his STB terminal 11, the selection signal returns to the exchange 1 in order to redefine its switching pattern and to supply the concerned STB terminal 11 with only the selected television channel, rather than all available channels. When it is considered that STB terminal 11 could also receive signals belonging to more than one television services, it evidently appears that a reduction is obtained in terms of occupation of the band of the transmission channel interposed between the building node and the individual socket 8.

In other words, even if at least three television services are present at each user socket 8 and each service offers a big number of channels, each active user STB terminal 11 will select a single television channel.

In particular, aiming at making the system according to this invention compatible with the distribution of signals belonging to land based television channels to users not having connections with other television services and consequently are not provided with STB terminals 11, according to the preferred embodiment of this invention, all these signals are conveyed by the MATV facility 7, thereby eliminating the signals replicated with the worst Signal-to-Noise Ratio (SNR) at the most, and maintaining the selection at a level corresponding to the user television set.

Therefore, the optimum distribution system, in terms of band occupation, is the one that, considering all available not land based television channels, conveys at each instant all and exclusively signals belonging to television channels (and, by obvious extension, the data channels of telecommunication services), as selected at each particular time by the user terminals connected thereto.

This means that, even if hundreds television programs and data channels potentially amenable to be distributed are present at the input end of the concerned building node, in the assumption that the user terminals connected to the node are N, the channels that will engage the distribution facility 7 will be N. If N is estimated according to the well known formulas of the traffic theory, it will be possible to size the maximum capability of said facility 7 in terms of band width. Since the above mentioned number is not higher than a few tens, it appears to be evident that an installation of MATV type is sufficient to fulfil the requirement.

In this respect, the signals conveyed by said facility 7 from the exchange 1 to the various user apparatuses 9, by which the so-called "downstream" flow or channel is formed, comprise all signals belonging to land based television channels, coming from the receiver system 3 for the land based television radio frequencies, all signals belonging to downstream data and/or voice channels corresponding to telecommunication services, the signals belonging to satellite based and/or cable based television channels as selected by active user STB terminals 11 and lastly signals generated by exchange 1 for controlling said active STB terminals 11.

On the other hand, the signals conveyed by said facility 7 from the user apparatuses 9 to exchange 1, by which the so-called "upstream" flow or channel is formed, comprise the signals belonging to upstream data and/or voice channels corresponding to telecommunication services as well as all signals corresponding to the selections performed by active user STB terminals 11. Such selection signals included in said upstream channel are utilized by said exchange 1 to convey at each time only signals belonging to satellite based and/or cable based television channels corresponding to the selections performed by the active user STB terminals 11.

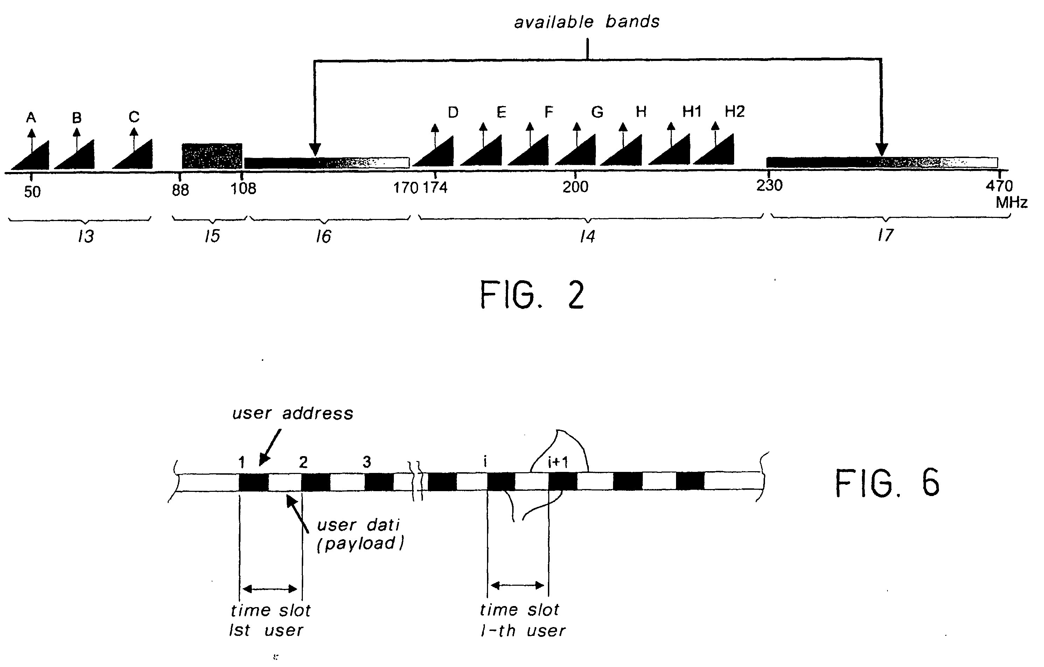

The frequency distribution of the signals appearing upstream the exchange 1 is schematically illustrated in Figure 2. In frequency band VHF I, as designated by reference numeral 13, three television channels can be present, with amplitude modulated, suppressed or vestigial side band (AM-USB), while seven AM-VSB television signals can be present in band VHF III. As a general rule, not all of these ten channels are effectively occupied by radio frequency broadcast television signals.

A greater number of radio frequency broadcast television channels are allocated to band IV and/or to band V, not shown, the frequencies of which are comprehensively variable in the range of 470 to 862 MHz.

Band 15 of frequencies variable in the range of 88 to 108 MHz can be jammed by frequency modulated (FM) radio broadcasts in air.

Therefore, exchange 1 is adapted to allocate signals belonging to satellite based and/or cable based television channels into frequency band 16 variable in the range of 110 to 170 MHz and into frequency band 17 variable in the range of 230 to 470 MHz, as selected by active STB terminals 11.

Furthermore, since the same television program is broadcast both in band IV and in band V also in multiple frequency ranges, it is possible to drive said exchange 1 so as to perform a filtering function on the signals appearing in such bands in order to suppress all replicated television signals having worst SNR, in such a way as to distribute the qualitatively best signal and to make further frequency ranges available for allocating the signals belonging to satellite based and/or cable based television channels.

In conclusion, a range of about 300 MHz in bands 16 and 17 with an additional range of 100 MHz recovered by filtration in bands IV and V are made available to exchange 1 for allocating signals belonging to satellite - and/or cable-based television channels. Since in the preferred embodiment of this invention, the band portion occupied taken up by each switched television channel is of 8 MHz, the concerned exchange 1 can allocate about 50 satellite based and/or cable based television channels and, therefore, it will be in a position to fulfil the demands of 50 active user STB terminals 11 without access conflicts to said exchange 1 being raised.

It will be apparent to those skilled in the art that such capabilities are more than sufficient to fulfil all service requirements of a building node.

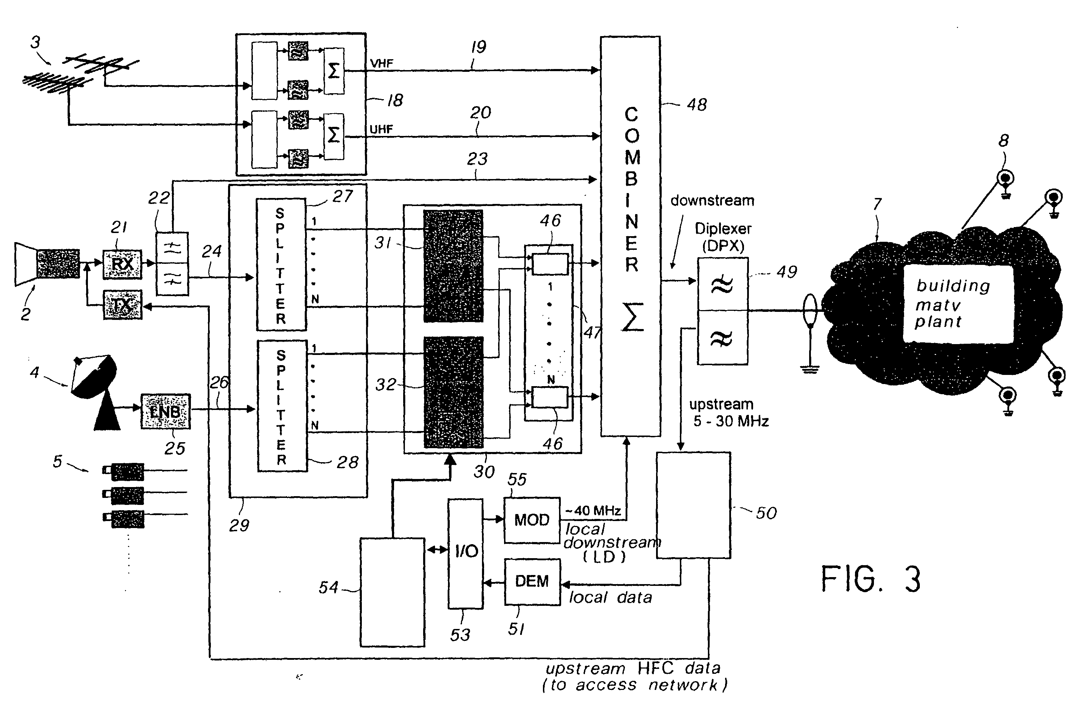

By referring to Figure 3, an exchange 1 according to a preferred embodiment of the system provides for those signals belonging to land-based television channels coming from the receiver system 3, which comprises one or more antennas, to be conveyed to a filter unit 18, comprising two combiner filters that operate in bands VHF and UHF, respectively. Output VHF 19 and output UHF 20 of said unit 18 convey one only signal for each television channel, thereby eliminating any replicated signals having the worst SNR. In order words, the land based television channels are introduced into system 7 with no frequency variation so as to be received by all users connected according the usual presently adopted method. In this way, exchange 1 exclusively provides for passively filtering the spectrum so as not to repeat the same television program several times, as it often occurs at present, but it exclusively delivers the qualitatively best signal selected among the available ones. Such an operation becomes necessary in order to "clean" the electromagnetic spectrum to the maximum possible extent, so as to make it available for conveying other services on said MATV facility 7.

The multicarrier signal comprising the signals belonging to television channels and to downstream data and/or voice channels of telecommunication services available on HFC network 2 is conveyed to a receiver unit 21 which translates it to base band having a frequency variable in the range of 54 to 862 MHz, in the preferred embodiment. In particular, the signals belonging to television channels available on network HFC 2 comprise Digital Video Broadcasting-Cable or DVB-C signals, each of which is formed by a packet of 6-8 digital programs, which are compressed in MPEG-2 and multiplexed in order to form the so-called "transponder stream" which, in turn, modulates in 64QAM the VHF or VHF carrier. The downstream data and/or voice channels of telecommunication services comprise data outcoming from the Internet Provider or ISP as well as downstream channels corresponding to narrow band services, such as the conventional telephone services or Plain Old Telephone Services (POTS), the Integrated Service Digital Network (ISDN) Basic Rate Interface (BRI) as well as the downstream data corresponding to pay television services transmitted to STB terminals 11.

The base band multicarrier signal from the output of receiver 21 is conveyed to a filter 22 in order to separate the signals belonging to data and/or voice downstream channels, routed to output 23, from signals belonging to television channels routed to output 24. In particular, filter 22 allocates the signals belonging to data and/or voice downstream channels of telecommunication services to predetermined and fixed, namely not switched, frequency bands, distributed to all sockets 8.

The signals belonging to satellite based television channels which are outcoming from the receiver system 4 including one or more antennas, are conveyed to a proper receiver unit 25.

The signals appearing on output 24 of filter 22 and on output 26 of the satellite receiver 25 are coupled to the inputs of two N-output replicators or splitters 27 and 28, respectively, which form a replication or splitting unit 29.

The N outputs of splitters 27 and 28 are coupled to a frequency filtering and translating unit 30, comprising a unit 31 for HFC radio frequency conversion and a unit 32 for conversion of satellite radio frequencies.

Each of said units 31 and 32 includes N radio frequency converter-filters that filter the input signal so as to allow only the signal belonging to a television channel to pass, by translating it from the original radio frequency range, HFC or satellite, respectively, to one of the frequency ranges free or available for the allocation functions performed by said exchange 1.

The above mentioned number N is preferably equal to the maximum number of switched television channels that can be allocated by said exchange 1 and, as above said, it is sufficient to fulfil the maximum demands from the concerned users, thereby absolutely preventing any conflicts from arising, with possible consequence that demands of some users remain unfulfilled.

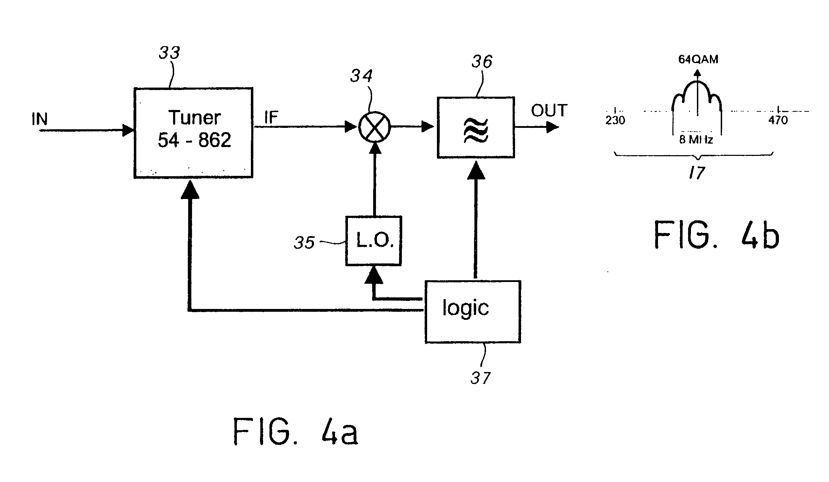

By referring to Figure 4a, each radio frequency filter-converter HFC is provided with a constant amplitude pass band and tuneable central frequency tuner 33, which filters the input HFC television signals, as allocated to frequency band extending between 54 and 862 MHz, and allows the HFC television signal selected by a STB terminal 11 to pass to the output. The output television signal is then frequency translated by means of a mixer 34 that mixes it with the signal of a selectable frequency local oscillator 35, as well as a band-pass filter 36, having a constant amplitude pass band and tuneable central frequency. In particular, a logic unit 37 generates the control signals to be used to establish the central frequency of tuner 33, the frequency of oscillator 35 and the central frequency of filter 36. Figure 4b illustrates a schematic diagram showing the frequency distribution of the signal modulated with 64QAM modulation (64 symbol Quadrature Amplitude Modulation) with a band width of 8 MHz, as appearing at the output of the converter-filter of Figure 4a when the frequency translation operation reallocates the selected television signal to band 17 (extended S band).

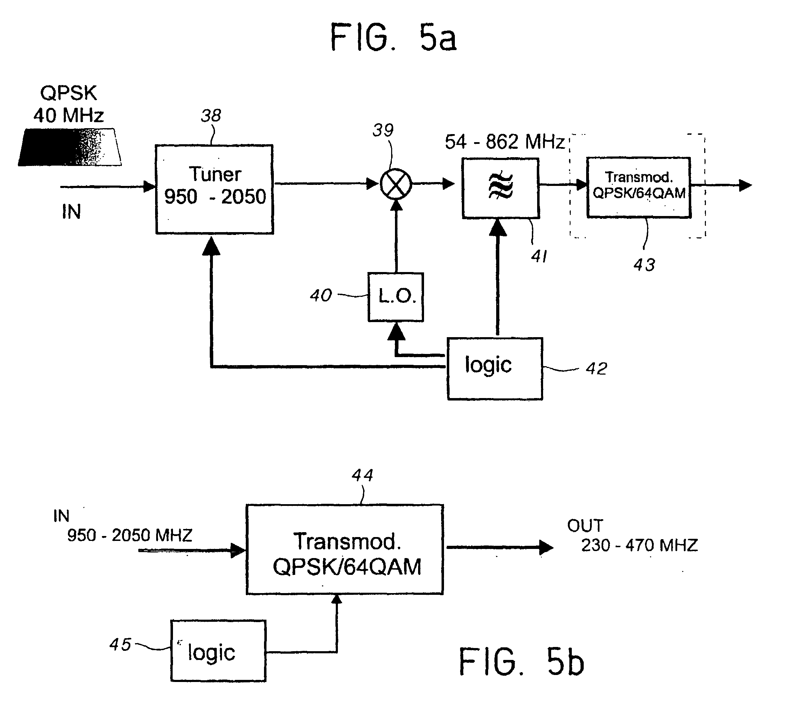

By referring to Figure 5a, a first embodiment of the satellite radio frequency converter-filters includes a tuner 38, having a pass band of constant amplitude and tuneable central frequency, which filters the input satellite based television signals, as allocated to the frequency band extending from 950 and 2050 MHz, and allows the satellite based television signal selected by STB terminal 11 to pass to the output. In particular, the input satellite based television signals are modulated with Quaternary Phase Shift Keying (QPSK) modulation with a band width of 40 MHz. The television signal outputted by tuner 38 is then frequency translated by means of mixer 39 that mixes it with the signal of a selectable frequency local oscillator 40, as well as a band-pass filter 41, having a constant amplitude pass band and tuneable central frequency. In particular, a logic unit 42 generates the control signals to be used to establish the central frequency of tuner 38, the frequency of oscillator 40 and the central frequency of filter 41. In this case, channel QPSK appears to be reallocated, for instance to band 17, but it still occupies a band of 40 MHz. This means that the satellite radio frequency converter-filter of Figure 5a has a simple and low cost construction, but it still entails a band occupation 5 times larger than the band occupied by a 64QAM modulated signal, thereby reducing the number N of television channels allocable to facility 7. Furthermore, since the QPSK modulation is not compatible with STB terminals 11 for HFC television channels, an additional STB terminal 43 is anyway needed downstream of socket 8 in order to perform the transmodulation from QPSK to 64QAM system.

Figure 5b illustrates the preferred embodiment of the satellite radio frequency converter-filters, including a transmodulator 44 to perform filtering the selected television signal, transmodulating it from QPSK to 64QAM system as well as frequency reallocating the transmodulated signal. A logic unit 45 generates the control signals to be coupled to transmodulator 44 by selecting the filter central frequency and the reallocation central frequency. In this case, the converter-filter is more complex than that of Figure 5a, but it enables an output signal to be obtained with a band occupation of 8 MHz and compatible with the STB terminals 11 for HFC television channels.

As it is shown in Figure 3, each one of said N pairs of homologous outputs of the radio frequency conversion units 31 and 32, respectively, is coupled to one of N switches 46 that form a N output switching unit 47. In particular, each switch 46 corresponds to a STB terminal 11. Obviously, a HFC or satellite based television signal is present at the output of each switch 46, according to the selection of the corresponding STB terminal 11. Anyway, it is also possible to implement the arrangement so that, when the terminals connected at a given time are M, where M < N, the outputs of (N - M) switches 46 are in a high impedance condition. The N outputs (or the M active outputs) of said switching unit 47 are added in combiner 48 to the signals on the VHF output 19 and on the UHF output 20 of said filter unit 18 and to the signals belonging to the downstream data and/or voice channels of the telecommunication services available on output 23 of said filter 22. The output of combiner 48 forms the downstream channel that is conveyed from the exchange 1 through a duplexer 49 as well as the MATV facility 7 to the sockets 8 and to the user apparatuses 9.

Upstream channel that is conveyed from said user apparatuses 9 to exchange 1 through said MATV facility 7 is transmitted by duplexer 49 to a selector 50 of local data. Said upstream channel is preferably allocated to frequency band extending from 5 to 30 MHz. Selector 50 separates all those signal corresponding to television channel selections performed by active STB terminals 11, which form a local upstream data sequence, from signals belonging to upstream data andlor voice channel corresponding to telecommunication services. The signals belonging to upstream data and /or voice channels of telecommunication services are then passed unaltered and are transmitted to said HFC network 2.

The above mentioned local upstream data sequence, after demodulation by demodulator 51, is conveyed through an input/output (I/O) interface to a logic control unit 54 aimed at controlling said exchange 1, which, by decoding them, provides for reading the address of the caller unit (identification of the STB terminal 11 formulating the request) as well as for construing the request. Based upon the requests, said logic unit 54 generates (if necessary) the control signals controlling said filtering and frequency translating unit 30 as well as the local downstream data sequence for controlling said STB terminal 11. Such local downstream data sequence, through said interface unit 53 and a modulator 55, preferably a binary frequency variation modulator (FSK = Frequency Shifting Keying), is coupled to the input of combiner 48 in order to be added to other signals by which the downstream channel of said exchange 1 is formed. Preferably, the carrier of said local downstream data sequence is at a frequency of 40 MHz.

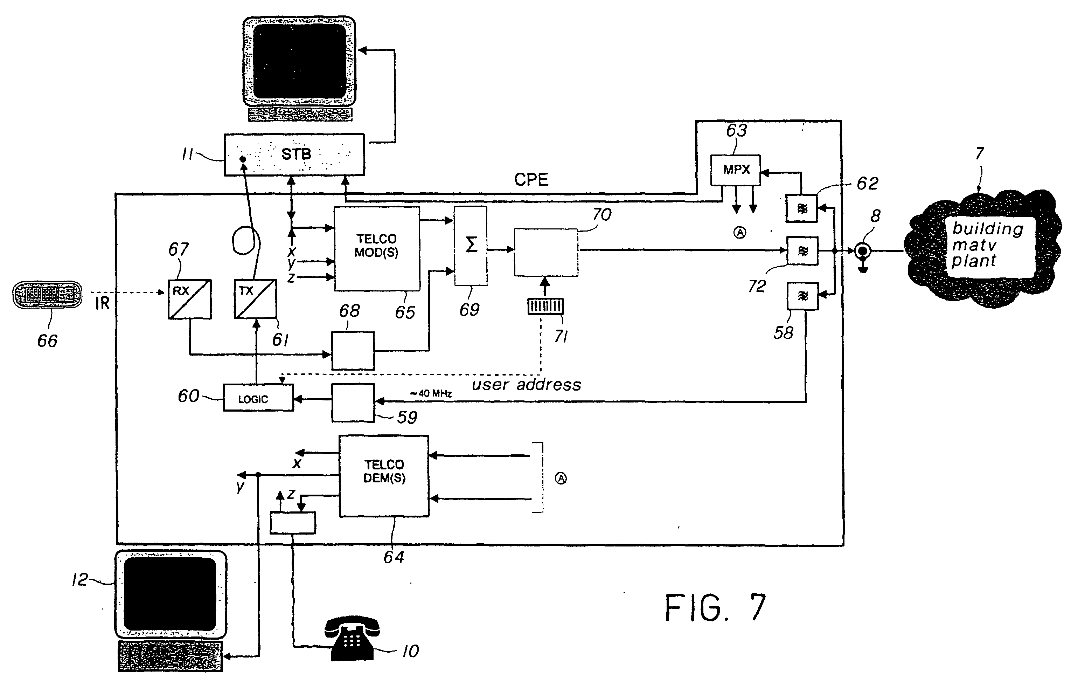

By referring now to Figure 6, it can be observed that said local downstream data sequence generated by logic unit 54 is arranged so that any data 56 routed to each specific STB terminal 11 are preceded by an address 57 which identifies the STB terminal 11 which they are related to.

By referring to Figure 7, a user apparatus 9 connected to MATV facility 7 by means of a socket 8 comprises a first band pass filter 58 that transfers the signal belonging to the local downstream data sequence to a FSK demodulator 59. The resulting demodulated signal is then conveyed to a logic unit 60 that processes it, by decoding the local downstream data sequence, for recognition of the address 57 belonging to said STB terminal 11 and interpretation of the information content of the corresponding data 56. Based upon such decode operation, said logic unit 60 couples the control signals of said STB terminal 11 to a transmitter unit 61 that modulates them on an infrared ray (IR) carrier and transmits them to said STB terminal 11. It will be apparent to those skilled in the art that the transmission of decoded data 56 to STB terminal 11 can also be effected by means of other different methods, by utilizing corresponding architectures.

Furthermore, said user apparatus 9 can also be provided with a second band pass filter 62 that conveys any signals belonging to television channels as well as any signals belonging to data and/or voice downstream channels related to telecommunication services to a frequency multiplexer 63. Multiplexer 63 transmits all signals belonging to television channels to said STB terminal 11 and all signals belonging to data and /or voice downstream channels to a TELCO demodulator 64 for telecommunication services, which provider for conveying them to the corresponding terminals, such as a telephone set 10, a STB terminal 11 and a PC 12.

The data and/or voice upstream channels corresponding to telecommunication services outcoming from said telephone set 10, from said STB terminal 11 and from said PC 12 are modulated by a TELCO modulator 65 for telecommunication services. The signal travelling on an IR carrier outcoming from a remote controller 66 for selection of the television program and control of said STB terminal 11 is received by a receiver 67 and sent to a FSK modulator 68 that generates the local upstream data sequence related to the STB terminal 11 connected to the concerned user apparatus 9. The signals outcoming from said TELCO modulator 65 and from said FSK modulator 69 are added together in a combiner unit 69 and relayed to a further modulator 70. Modulator 70 in combination with a local oscillator 71 tuned on the frequency allotted to the specific concerned STB terminal 11 generates the upstream channel related to the considered user apparatus 9 and conveys it through a band pass filter 72 to the MATV facility 7 to enable it to reach the exchange 1. Preferably, the frequency on which said local oscillator 71 is tuned is comprised in the frequency band which extends from 5 to 30 MHz and coincides with the pass band of said filter 72. In particular, said local oscillator 71 can also transmit the signal for acknowledging the address of said STB terminal 11 to logic unit 60.

In this way, the selection performed by a user is routed to the exchange 1 rather than directly to said STB terminal 1, through said upstream channel by means of a combination of it with the TELCO data on a local oscillator of a frequency in the band of 5 to 30 MHz allotted to any individual user.

It will be apparent to those skilled in the art that the functions of said STB terminal 11 can be integrated with said user apparatus 9. Furthermore, the apparatus 9 can be adapted to manage or handle a number of user terminals (10, 11, 12) of the same type, as it can occur when a number of STB terminals 11 are connected downstream of said socket 8.

It will also be apparent to those skilled in the art that a system according to this invention can easily be modified and/or adapted to process signals belonging to further television and/or telecommunication services. By way of exemplification, as it is shown in Figures 4 and 5, CCTV systems 5 can be provided such that, by suitable insertion of signals related to video and/or audio and/or control functions into channels upstream or downstream of said exchange 1, they can be transmitted unaltered along said MATV facility 7 or they can be transmitted only if activated by the user and reallocated in frequency by said exchange 1.

It is also apparent that the system according to this invention can be applied to a case in which the signals belonging to satellite based television signals should not be distributed.

In conclusion, the already existing centralized coaxial antenna facility 7 is managed in intelligent mode by means of said exchange 1, positioned at a building node, and of the dedicated user apparatuses 9, connected to socket 8, in such a way as to enable the simultaneous distribution of conventional television signals as well as of signals belonging to HFC services and possibly also television signals received from satellites by means of one or more centralized parabolic antennas.

Said already existing or newly realized MATV facility 7 appears to be completely transparent to the usual broadcast or diffusion of land based television channels. In view of the above, exchange 1 is compatible with the usual services offered by said MATV facility 7 and any user not desiring to be connected to further television or telecommunication services continues anyway to utilize the land based signals. On the opposite side, any user desiring to be connected to further services should provide his own coaxial socket 8 (any one in his fiat) with the concerned user apparatus 9, which acts as a "concentrator" in respect of the various user terminals (10, 11, 12) installed in the concerned apartment. The connection between user apparatus 9 and said user terminals (10, 11, 12) is realized by means of standard interface units (telephone cable, coaxial cable or infrared coupling), but it is possible to realize a radio connection, as well.

Also the simple selection performed by the user of a desired (not land based) television channel in respect of any one of the various available services is "intercepted" and routed through the upstream flow to said exchange 1 where it is compared with other analogous selections and consequently managed. In this case, a local (building) data channel is involved which is possibly a portion of an upstream data flow of greater amplitude.

The above exchange 1 is coupled, on one side, to the various input services outcoming from the antennas and/or from external cables, namely the land based television channels, the HFC telecommunication services, the satellite based television channels and, on the other side, namely the output side, to coaxial cable of said MATV distribution facility 7.

The system proposed according to this invention is provided with a high compatibility grade with further future possible telecommunication services; in other words, it is an "open" system in respect of transferring data in both directions at a significant bit rate for the concerned services.

Apparatus 9 performs the function to "dialogue" with said exchange 1 (in order to manage the MATV facility 7 in a suitable form to convey a plurality of interactive and not-interactive television services) and, at the same time, it is "open" to conveying telecommunication signals so that said MATV facility 7 can be effectively considered as a natural completion of radio based point-multipoint or PTM access systems presently studied, in order to easily apply such PTM systems in urban areas where the users are to a large extent distributed in buildings and apartments.

In particular, the subsystem of said user apparatus 9 which is part of the access network for telecommunications is integrated with the local functions, as above described, in order to perform the television signal switching function. Aiming at rendering such subsystem perfectly integral and transparent, the typical functions of modems are subdivided into the basic functions of modulation and demodulation in user apparatus 9 and subsequently grouped, namely only modulation or only demodulation, in order to introduce the related signals from the PTM system into the upstream flow or to extract them all from the related downstream flow; in Figure 7, such circuit subunits are shown as TELCO modulator 65 and TELCO demodulator 64, respectively. Obviously, such signals to/from the related external user terminals (10, 11, 12) is realized within the concerned user apparatus 9.

It will also be apparent to those skilled in the art that the construction of said user apparatus 9 is not unique and that it is easily modifiable, since it is correlated with the services which should be delivered to the users and conclusively with the user terminals to be interconnected.

The preferred embodiment of this invention has been hereinbefore explained by way of illustration and not by way of limitation, and it should be understood that those skilled in the art can made variations and/or changes therein without departing from the scope of this invention, as defined by the following claims.

## Claims

1. An optimized system for distribution of television and telecommunication services from a peripheral node to user terminals (10, 11, 12), said television services including land based radio frequency broadcast television channels, satellite based radio frequency broadcast television channels and HFC network or cable based broadcast television channels, each of said telecommunication services including a downstream data and/or voice channel and an upstream data andlor voice channel, said system also including a bi-directional switch exchange (1) connected to said peripheral node, a facility (7) for bi-directional distribution of signals connected to said exchange (1) and at least a user apparatus (9) connected to said bi-directional facility (7) as well as to said user terminals (10, 11, 12), **characterised in that** said exchange (1) comprising a filter (22), a frequency filtering and translating unit (30), a logic control unit (54), a combiner (48) and a selector (50), said combiner (48) and selector (50) being connected to said bi-directional distribution facility (7), the signals belonging to said land based television channels being applied to the input of said combiner (8), said filter (22) receiving the signals belonging to said cable based television channels and to said downstream data and/or voice channels, said filter (22) separating the signals belonging to said downstream data and/or voice channels from the signals belonging to said cable based television channels, said filter (22) also reallocating the signals belonging to said downstream data and/or voice channels to pre-established frequencies and applying them to the input of said combiner (48), said filter (22) also applying the signals belonging to said cable based television channels to said frequency filtering and translating unit (30), the signals belonging to said satellite based television channels being also applied to said frequency filtering and translating unit (30), said selector (50) being connected to said bi-directional distribution facility (7) in order to receive a local upstream data sequence therefrom and to apply it to said control logic unit (54) and to receive the signals belonging to said upstream data and/or voice channels from said bi-directional distribution facility (7) and to apply them to said peripheral node, said control logic unit (54) generating the control signals to be applied to said frequency filtering and translating unit (30) and a local downstream data sequence to be applied to the input of said combiner (48), said frequency filtering and translating unit (30) selecting the signals belonging to both said cable based television channels and said satellite based television channels and frequency reallocating and/or translating them for applying them to the input of said combiner (48), said combiner (48) mixing the input signals and applying them to said bi-directional distribution facility (7), said user apparatus (9) including a demodulator (59), a logic unit (60), a modulator (68) and a combiner (69), said logic unit (60) processing said local downstream data sequence outcoming from said demodulator (59), said modulator (68) modulating a local upstream data sequence related to said user apparatus (9), said combiner (69) mixing the signals belonging to said local upstream data sequence as well as the signals belonging to upstream data and /or voice channels related to said user apparatus (9) and applying them to said bi-directional distribution facility (7).

2. A system according to claim 1, **characterized in that** said exchange (1) further comprises, upstream of said combiner (8), a unit (18) for filtering the signals belonging to said land based television channels, which eliminates all replicated signals having the worst signal-to-noise ratio (SNR).

3. A system according to claim 1 or 2, **characterized in that** said television services further comprise television channels related to closed circuit television systems (CCTV) that are coupled to the input of said combiner (48) or to said frequency filtering and translating unit (30).

4. A system according to any one of the preceding claims, **characterized in that** said frequency filtering and translating unit (30) comprises a converter unit (31) for conversion of HFC radio frequencies, a converter unit (32) for conversion of satellite based radio frequencies as well as a switch unit (47), said converter units (31, 32) having N inputs and N outputs, said switch unit (47) having 2*N inputs and N outputs, the homologous outputs of both said converter units (31, 32) being alternatively selected by said switch unit (47) and outputted to said frequency filtering and translating unit (30).

5. A system according to claim 4, **characterized in that** said HFC radio frequency converter unit (31) comprises N converter-filters, each of which comprises a tuner (33) having a constant amplitude pass band and tuneable central frequency, a mixer (34), a selectable frequency local oscillator (35), a band pass filter (36) having a constant amplitude pass band and a tuneable central frequency, as well as a logic unit (37), said tuner (33) filtering said input signal, said mixer (34), said local oscillator (35) and said pass band filter (36) translating the frequency of the filtered signal and said logic unit (37) generating the control signals.

6. A system according to claim 4 or 5, **characterized in that** said satellite based radio frequency converter unit (32) comprises N converter-filters, each of which comprises a tuner (38) having a constant amplitude pass band and tuneable central frequency, a mixer (39), a selectable frequency local oscillator (40), a band pass filter (41) having a constant amplitude pass band and a tuneable central frequency, as well as a logic unit (42), said tuner (38) filtering said input signal, said mixer (39), said local oscillator (40) and said pass band filter (41) translating the frequency of the filtered signal and said logic unit (42) generating the control signals.

7. A system according to claim 6, **characterized in that** each of said N converter-filters comprised in said satellite based radio frequency converter unit (32) further comprises a transmodulator (43).

8. A system according to claim 4 or 5, **characterized in that** said satellite based radio frequency converter unit (32) comprises N converter-filters, each of which comprises a transmodulator (44) and a control logic unit (45), said transmodulator (44) filtering , transmodulating and frequency translating the input signal.

9. A system according to any one of the preceding claims, **characterized in that** said signal bi-directional distribution facility (7) is an apparatus for centralized distribution of land based television channels or a Master Antenna TV (MATV) facility.

10. A system according to any one of the preceding claims, **characterized in that** each user apparatus (9) is connected to one or more telephone device (10) and/or to one or more Personal Computer (PC) (12).

11. A system according to any one of the preceding claims, **characterized in that** each user apparatus (9) is connected to one or more communication apparatuses (11) or Set-Top-Box (STB), with a pay television service provider.

12. A system according to any one of the preceding claims, **characterized in that** the local upstream or local downstream data sequences are modulated by digital modulation.

13. A system according to claim 12, **characterized in that** said digital modulation is a FSK and/or a PSK and/or QAM modulation.

14. A system according to claim 12 or 13, **characterized in that** said user apparatus (9) further comprises a digital demodulator (59) arranged upstream of said logic unit (60), a frequency multiplexer (63) and a TELCO demodulator (64) for telecommunication services, arranged upstream of said user terminals (10, 11, 12), a TELCO modulator (65) for telecommunication services, arranged downstream of said user terminals (10, 11, 12), a digital modulator (68) which receives the television channel selection data from at least one user terminal (11) as well as a combiner (69) arranged downstream of said TELCO modulator (65) and of said digital modulator (68) and upstream of said bi-directional distribution facility.

## Patentansprüche

1. Optimiertes System zur Verteilung von Fernseh - und Telekommunikationsdiensten von einem peripherischen Kinotenpunt bis zu Benutzerendstationen (10,11,12), wobei die vorgenannten Fernsehdiensten auf Erde basierten Rundfunkfrequenz-Fernsehkanäle, auf Satellite basierte Rundfunkfrequenz - Fernsehkanäle und auf HFC - Netzwerk oder auf Kabel basierten Rundfunkfrequenz - Fersehkanäle enthalten, jeder der vorgenannten Telekommunikationsdiensten stromabseitige Daten-und/oder Stimme-Kanäle und stromaufseitige Datun - und/oder Stimmekanäle beeinhält und wobei das vorgenannte System auch einen mit dem vorgenannten Knotenpunkt verbundenen Wechselschalter, eine Anordnung (7) zur Verteilung der Signale in zwei Richtungen, welche mit vorgenannten Wechselschalter verbunden ist und mindestens ein mit der vorgenannten Anordnung (7) sowie mit den vorgenannten Benutzerendstationen (10,11,12) verbundenes Benutzerapparat (9), enthält**dadurch gekennzeichnet, dass** der vorgenannte Wechselschalter (1) einen Filter (22), eine Frequenz filtrierende und verstellende Einheit (30), eine Wählscheibe (48) eine Logiksteuereinheit (54) und einen Wähler (50) enthält, wobei die genannten Wählscheibe (48) und Wähler (50) mit der vorgenannte Verteilungsanerdnung (7) verbunden sind, die zu den auf Erde basierten Rundfunk-frequenz - Fernschkanäle zugehörigen Signale an den Eingang der genannten Wählscheibe (8) zugesandt werden, wobei der Filter (22) die zu den auf Kabel basierten Fernseh-kanäle und zuden stromabseitigen Daten-und/oder Stimmen-Knälen zugehörige Signale erhält, der genannte Filter (22) die zu den stromabseitegen Daten und/oder Stimmen-Kanälen zugehörigen Signale und die zu den auf Kabel-basterten Fersehkanälen zugehörigen Signale voneinander trennt, der genannte Filter (22) ausserdem die zu den stromalseitigen Daten - und/oder Stimmen - Kanälen zugehörigen unter den vorbestimmten Frequenzen verteilt und an den Eingang der vorgenannten Wählscheibe zusenden auf Kabel basierten Fernseh-Kanälen zugehörige Signale an die vorgenannte Frequenz filtrierende und verstellende Einheit (30) zusendet, wobei die zu den auf Satellit basiente Fernsehkanälen zugehörigen Signale gleichfalls an die Frequenz filterende und verstellende Einheit (30) zugesandt werden, der vorgenannte Wähler (50) an die vorgenannte Verteilungsanordnung (7) angeschlossen ist, um von derselben eine lokale stromabseitige Datensequenz zu erhalten und diese an die vorgenannte Logik Stenereinheit zuzuzenden, und um die zu den den stromaufsetigen Daten - und/oder Stimmen - Kanälen zugehörigen Signale von der vorgenannten Verteilungsanordnung (7) zu erhalten und diese an den peripherischen Knotenpunkle zuzusenden, und wobei die vorgenannte Logik - Stenereinheit (54) an die Frequenz filtriende und verstellande Einheit (30) zuzusendende Signale und eine an den Eingang der genannten Wählscheibe (48) zuzuführende Lokale stromabseitige Daten - Sequenz erzeugt, die vorgenannte Frequenz filtrierende und verstellende Einheit (30), welche die zu den beiden der vorgenannten auf Kabel und auf Satellit basierten Fernsehkanäle zugehörige Signale auswählt und auf Frequenzen verteilt und /oder verstelt diese Signale zur deren Zusendung an den Eingang der vorgenannten Wählscheibe (48), wobei die vorgenannte Wählscheibe (48) die ankommenden Signale vermischt und an die Verteilungsanordnung (7) zusendet, wobei das vorgenannte Benutzerapparat (9) einen Demodulator (59), eine Logik - Einheit (60), einen Modulator (68) und eine Wählscheibe (69) enthält, die vorgenannte Logik - Einheit die aus dem vorgenannten Demodulator (59) ausgehende die vorgenannten stromabseitige lokale Daten-Sequenz ausarbeitet, der vorgenannte Modulator (68) eine stromaufseitige lokale, an das Benutzerapparat (9) bestimmte Daten-Sequenz moduliert und wobei die vorgenannte Wähltscheibe (69) die zu der vorgenannten stromaufseitigen Daten-Sequenz zugehörigen Signale und die zu den stromauseitigen mit dem Benutzerapparat (9) in Beziehung stehenden Daten und/oder zu Stimme-Knälen zugehörigen Signale vermischt und diese an die vorgenannte Verteilungsaordnung (7) übersendet.

2. System nach Anspruch 1, **dadurch gekennzeichnet, dass** der vorgenannte Wechselschalter (1) ausserdem stromauf der vorgenannten Wählscheibe (8), eine Einheit (18) zum Filtern der zu den auf Erde basierten Fernsehkanälen zugehörigen Signale, welche alle wiederholte Signale mit dem schlechten Signal - Lärm - Verhältnis ausscheidet.

3. System nach Anspruch 1 oder 2, **dadurch gekennzeichnet, dass** die vorgenannten Fernsehdienste ausserdem an geschlossene Kreis-Fernsehsysteme (CCTV) bezogene Fernsehkanäle enthält, die an den Engang der vorgenannten Wählscheibe (48) oder an die vorgenannte Frequenz filtriezende und verstellende Einheit (30) gekuppelt sind.

4. System nach je einem der vorhergehenden Ansprüche, **dadurch gekennzeichnet, dass** die vorgenannte Frequenz filtrierende und verstellende Einheit (30) eine Umformer - Einheit (31) zur Unformung von HFC Rundfunkfrequenzen, eine Umformer - Einheit (32) zur Umformung von auf Satellit basierten Rundfunkfrequenzen, sowie eine Schalter - Einheit (47) enthält, wobei die vorgenannten Umformer- Einheiten (31,32) N Eingänge und N Ausgänge aufweisen, die vorgenannte Schalter - Einheit 2*N Eingänge und N Ausgänge ausweist die beiden Umformer - Einheiten (31,32) wechselweise durch die vorgenannte Schalter-Einheit (47) ausgewählt und an die vorgenannte Frequenz filtrierende und verstellende Einheit (30) angeschlossen werden.

5. System nach Anspruch 4, **dadurch gekennzeichnet, dass** die vorgenannte HFC Rundfunkfrequenz - Umformer - Einheit (31) N Umforme-Filter hatvon denen jeder einen Abstimmapparat (33) mit einer abstimmbaren Konstantamplitude-Bandpass-Zentrafrequenz, einen Mischer (34), einen Bandpassfilter (36) mit einer Konstant - Bandpass - Amplitude und einer abstimmbaren Zentralfrequenz, so wie eine Logik - Einheit (37) enthält, wobei der vorgenannte Abstimmapparat (33) das vorgenannte Eingangssignal filtriert, der vorgenannte Mischer (34), der vorgenannte Oszillator (35) und der vorgenannte Bandpassfilter (36) die Frequenz des filtrirten Signals verstellen und die vorgenannte Logik-Einheit (37) die Stenersignale erzeugt.

6. System nach Ansprüche 4 oder 5, **dadurch gekennzeichnet, dass** die vorgenannte auf Satellit basierte Rundfunk-Umformer - Einheit (32) N Umformer-Filter hat, von denen jeder einen Abstimmapparat (38) mit einer abstimmbaren kenstantamplitude - Bandpass - Zantialfrequenz, einen Mischer (39), einen Lokal - Oszillator mit auswählbarer Frequenz (40), einen Bandpassfilter mit einer abstimmbaren Zentralfrequenz, sowie eine Logik-Einheit (42), dasvorgenannte Eingangssignal filtriert der wobei der vorgenannte Abstimmapparat (38) aufweist das vorgenannte Mischer (39), der vorgenannte Lokal - Oszillator (40) und der vorgenannte Bandpassfilter (4) die Frequenz des filtrierten Signals verstellen und die vorgenannte Logik-Einheit die Stenersignale erzeugt.

7. System nach Anspruch 6, **dadurch gekennzeichnet, dass** jeder der vorgenannten N Umformer - Filter, enthalten in der vorgenannten auf Satellit basierten Rundfunkfrequenz - Umformer - Einheit (32), ausserdem einen Kreuzmodulator (43) enthält.

8. System nach Ansprüche 4 oder 5, **dadurch gekennzeichnet, dass** die vorgenannte auf Satellit basierte Rundfunkfrequenz - Umformer - Einheit (32) N Umformer - Filter enthält, von denen jeder einen Krenzmodulator (44) und Steuer - Logikeinheit (45) aufweist, wobei der vorgenannte Kreuzmodulator (44) den Eingangssignal kreuzmoduliert und seine Frequenz verstellt.

9. System nach je einen der vorhergehenden Ansprüche, **dadurch gekennzeichnet dass** die vorgenannte Signal Verteilungsanordnung (7) ein Gerät zur zentralisierten Verteilung von auf Erde basierten Fersehkanälen oder eine Master-Antenna TV (MATV) Anordnung ist.

10. System nach je einem der vorhergehenden Ansprüche, **dadurch gekennzeichnet, dass** jeder Benutzerapparat (9) mit einer oder mehreren Telephon - Einrichtungen (10), und/oder mit einem oder mehreren Personal - Computer PC (12) verbunden ist.

11. System nach je einem der vorhergehenden Ansprüche, **dadurch gekennzeichnet, dass** jeder Benutzerapparat (9) mit einer oder mehreren Telephon - Einrichtungen (11) oder Set-Top-Bo (STB), mit einem Pay - TV - Dienst, verbunden ist.

12. System nach je einem der vorhergehenden Ansprüche, **dadurch gekennzeichnet, dass** lokale stromanfseitige oder lokale stromabseitige Daten - Sequenze durch Digital-Modulation moduliert sind.

13. System nach Anspruch 12, **dadurch gekennzeichnet, dass** die genannte Digital-Modulation eine FSK- und/oder PSK - und/oder QAM - Modulation ist.

14. System nach Anspruch 12 oder 13, **dadurch gekennzeichnet, dass** der vorgenannte Benutzerapparat (9) ausserdem einen stromauf der genannte Logik-Einheit (60) angeordneten Digital - Demodulator (59), einen stromauf der vorgenannten Benutzer - Terminale (10,11,12) angeordnneten TELCO - Demodulator (64) für Fermeldedienste, einen stromab der Benutzerterminale (10,11,12) angeordneten TELCO - Modulator (65) für Fernmeldedienste, einen Fernsehkanäle Wählsignale (11) erhaltenden Digital-Modulator (68). sowie eine stromab des vorgenannten TELCO - Modulators (65) und des vorgenannten Digital - Modulator (68) und stromauf der vorgenannten Wechselverteilungsanordnung angeordnete Wählscheibe (69) enthält.

## Revendications

1. Système optimisé de répartition des services de télécommunication et de télévision a partir d'un noeud périphérique vers des terminaux d'utilisateur (10, 11, 12), lesdites services de télévision comprenant des chaînes de télévision à radio fréquence, basées sur la terre, des chaînes de télévision à radio fréquence basées sur des satellites et des chaînes de télévision basées sur réseau HCF ou sur dès câbles, chaque desdits services de télecommunication ayant une chaîne de connés et/ou de voix inférieure et une chaîne de donnés et/ou de voix supérieure, ledit système comprenant en outre un commutateur bidirectional à deux directions (1) joint audit noeud périphérique, un équipement (7) pour la distribution à deux directions des signals, joint audit commutateur (1) et au moins un appareil diutilisateur (9) joint audit équipement de distribution ainsi que auxdits termineaux d'utilisateur (10, 11, 12), **caractérisé en ce qu'**il comprend un filtre (22), une unité de filtration et translation des fréquences (30), une unite de contrôle logique (54), un cadran d'appel (48) et un sélecteur (50), ledit cadran d'appel (48) et ledit sélecteur (50) étant joints audit équipement de distribution à deux directions (7), les signaux appartenants à lesdites chaîne de télévision basé sur la terre étant appliés à l'entrée dudit cadran d'appel (8), ledit filtre (22) recevant les signaux appartenants à lesdites chaînes de télévision sur des câbles et à lesdites chaînes des donnés et de voix inférieures, ledit filtre (22) séparant les signaux appartenants à lesdites chaînes des donnés et/ou de voix des signaux appartenants à lesdites chaînes de télévision basés sur des câbles, ledit filtre (22) réadaptant les signaux appartenants à lesdites chaînes des donnés et de voix inférieures à des fréquences préetablies et applicant les mêmes à l'entrée dudit cadran d'appel (48), ledit filtre (22) applicant en outre les signaux appartenants à lesdites chaînes de télévision basées sur des câbles à ladite unité de filtration et de translation des fréquences (30), ledit sélecteur (50) étant joint audit équipement de distribution (7) afin de reçevoir de le même une séquence des donnés locale supérieure et de l'appliquer à ladite unité de contrôle logique (54) et de recevoir les signaux appartenants à lesdites chaînes des donnés et de voix supérieures dudit équipement de distribution (7) et appliquer les mêmes audit noeud périphérique, ladite unité de contrôle logique (54) engendre des signaux de contrôle qui doivent être appliqués à ladite unité de filtration et de translation des fréquences (30) et une séquence des donnés local inférieure, qui doit être appliquée à l'entrée dudit cadrau d'appel (48), ladite unité de filtration et translation (30) sélectione les signaux appartenants à lesdites chaînes de télévision basées sur de câbles et à lesdites chaînes de télévision basées sur de satellites et réadpte les mêmes à la fréquence et/ou applique ces signaux à l'entrée dudit cadran d'appel (48), ledit cadran d'appel (48) mélange les signaux d'entrée et applique les mêmes audit équipement de distribution (7), ledit appareil d'utilisateur (9) comprend un démodulateur (59), une unité logique (60), un modulateur (68) et un cadran d'appel (69), ladite unité logique (60) élabore ladite séquence des donnés locale inférieure dedit démodulateur (59), ledit modulateur (68) module une séquence des donnés locale supérieure corrélée audit appareil d'utilisateur (9), ledit cadran d'appel (59) mélange les signaux appartenants à ladite séquence des donnés locale supérieure ainsi que les signaux appartenants à des chaînes des donnés et/ou de voix supérieures corrélées audit appareil d'utilisateur (9) et applique les mêmes audit équipement de distribution (7).

2. Système selon la revendication 1, **caractérisé en ce que** ledit commutateur comprend, en amont dudit cadran d'appel (8), une unité (18) pour filtrer les signaux appartenants à lesdites chaînes de télévision basées sur la terre, qui élimine tous les signaux répétés, ayant un mauvais rapport entre signal et bruit.

3. Système selon la revendication 1 ou 2, **caractérisé en ce que** lesdits services de télévision comprendent en outre de chaînes de télévision corrélées à des systèmes de télévision en circuit fermé (CCTV), qui sont accouples à l''ntrée dudit cadran d'appel (48) ou à ladite unité de filtration ou translation des fréquences.

4. Système selon une quelconque des revendications précédentes, **caracterisé en ce que** ladite unité de filtration et translation des fréquences (30) comprend une unitè des convertiteurs (31) pour la conversion desdites radio fréquences HFC, une unité des convertiteurs (32) pour la conversion desdites radio fréquences basée sur des satellites, ainsi que une unité des commutateurs (47), lesdites unités des convertiteurs (31, 32) ayant N entrées et N sorties, ladite unité de commutateurs (47) ayant 2* N entrées et N sorties, les sorties homoloques desdites deux unités des commutateurs (31, 32) étant sélectionées alternativement par ladite unité de commutateurs (47) et transmises à ladite unité de filtration et de translation des fréquences (30).

5. Système selon la revendication 4, **caractérisé en ce que** ladite unité des converteurs à radio fréquence HFC (31) comprend N filtres - convertiteur, chaque comprenant un syntoniseur (33) ayant une passe-bande à amplitude constante et une fréquence central syntonisable, un mélangeur (34), un oscilateur local à frquence sélectionnable (35), un filtre passe-bande (36) ayant une passe-bande à amplitude constante et une fréquence centrale syntonisable, ansi que une unité logique (37), ledit syntoniseur (33) filtrant ledit signal d'entrée, ledit mélangeur (34), ledit oscillateur (35) et ledit filtre passa-band (36) faisant la translation de la fréquence du signal filtré et ladite unité logique (37) engendrant les signaux de contrôle.

6. Système selon les revendications 4 ou 5, **caracterisé en ce que** ladite unité de converteurs à radio fréquence basée sur des satellites (32) comprend N filtres - convertiteurs, chaque comprenant un syntoniseur (38) ayant une passe-bande à amplitude constante et une fréquence central syntonisable, un mélangeur (39), un oscillateur local à fréquence sélectionable (40), un filtre passe-bande (41) ayant une passe-bande à amplitude constante et une fréquence centrale syntonisable, ainsi que une unité logique (42), ledit syntoniseur (38) filtrant ledit signal d'entrée, ledit mélangeur (39), ledit oscilalteur local (40) et ladite unité logique (42) engendrant les signaux de contrôle.

7. Système selon la revendication 6, **caractérisé en ce que** chaque desdits N convertiteurs-filtres dedite unité de convertiteurs à radio fréquence basée sur des satellites (32) comprend en outre un transmodulateur (43).

8. Système selon la revendication 4 ou 5, **caractérisé en ce que** ladite unité des convertiteurs à radio fréquence basée sur des satellites (32) comprend N convertiteur-filtres, chaque avec un transmodulateur (44) et une unité logique de contrôle, ledit transmodulateur filtre, transmodule et fait la translation en fréquence dudit signal d'entrée.

9. Système selon une quelconque des revendications précédentes, **caractérisée en ce que** ledit équipement de distribution bi-directionnale des signaux (7) est un appareil pour la distribution centralisée des chaînes de télévision basée sur la terre ou un Master Antenne TV (MATV) équipement.

10. Système selon une quelconque des revendications précédentes, **caractérisé en ce que** chaque appareil d'utilisateur (9) est joint à un ou plusieurs dispositives de téléphone (10) et/ou à un ou plusieurs Personal Computer (PC) (12).

11. Système selon une quelconque des revendications précédentes, **caractérisé en ce que** chaque appareil d'utilisateur (9) est joint à un ou plusiers appareils de communications (11) ou Set-Top-Box (STB) avec un pourvoyeur des services de télévision payantes.

12. Système selon une quelconque des revendications précédentes, **caractérisé en ce que** les séquences des donnés locales inférieures ou supérieurs sont modulées par une modulation digitale.

13. Système selon la revendication 12, **caractérisé en ce que** ladite modulation digitale est une modulation FSK et/ou PSK et ou QAM.

14. Système selon la revendication 12 ou 13, **caractérisé en ce que** ledit apreil d'utilisateur (9) comprend en outre un demodulateur digital (59) placé en amont dedite unité logique 60), un multiplexeur de fréquence (63) et un demodulateur TELCO (64) pour des services de télécommunication, placés en amont desdits terminaux d'utilasteur (10, 11, 12), un modulateur TELCO (65) pour des services de télécommunication, placé en aval dudits terminaux d'utilisateur (10, 11, 12), un modulateur digital (88) qui recoit des donnés de sélection des chaînes de télévision d'au moin un terminal d'utilisateur (11), ainsi que un cadron d'appel (69) placé en aval dudit modulateur TELCO (65) et dudit modulateur digital (68) et en amont dudit équipement de distribution.
